# EUROPÄISCHE PATENTSCHRIFT

(11) **EP 2 282 938 B1**
(45) Veröffentlichungstag und Bekanntmachung des Hinweises auf die Patenterteilung: **21.09.2011**
(21) Anmeldenummer: 09741745.5
(22) Anmeldetag: 30.04.2009
(51) Int. Cl.: B64F 1/04, B64F 1/22

(54) **BODENGEBUNDENE VORRICHTUNG FÜR DEN START-, LANDE- UND ROLLVORGANG VON FLUGZEUGEN.**
GROUND-BOUND DEVICE FOR TAKE OFF, LANDING AND TAXIING OF AIRCRAFT
DISPOSITIF AU SOL DESTINÉ AUX PROCESSUS DE DÉCOLLAGE, D'ATTERRISSAGE ET DE ROULAGE D'AVIONS

(30) Priorität: 09.05.2008 DE 102008023698
(43) Veröffentlichungstag der Anmeldung: 16.02.2011
(73) Patentinhaber: Binnebesel, Jan, 22391 Hamburg (DE)
(72) Erfinder: Binnebesel, Jan, 22391 Hamburg (DE)
(74) Vertreter: Hauck Patent- und Rechtsanwälte
(86) Internationale Anmeldenummer: PCT/DE2009/000616
(87) Internationale Veröffentlichungsnummer: WO 2009/135472

(56) Entgegenhaltungen:
- WO-A-03/078250
- DE-A1- 4 102 271
- DE-C- 925 508
- US-A- 2 988 305
- US-A- 3 210 029

## Beschreibung

Die vorliegende Erfindung bezieht sich auf eine bodengebundene Vorrichtung für den Start-, Lande- und Rollvorgang eines Flugzeugs ohne Fahrwerksystem oder mit eingezogenem Fahrwerk, das zusätzlich an einer Landebahn installiert wird.

Die Leermasse eines Flugzeuges hat einen großen Einfluss auf dessen Wirtschaftlichkeit. Eine kleinere Leermasse sorgt bei gleichbleibendem maximalen Abfluggewicht oder bei konstanter Nutzlast für eine bessere Wirtschaftlichkeit, da entweder mehr Nutzlast transportiert werden kann oder sich durch die Reduktion der Gesamtmasse ein geringerer Luftwiderstand und damit ein reduzierter Treibstoffverbrauch einstellt.

Das Fahrwerksystem nimmt bei konventionellen Verkehrsflugzeugen abhängig vom Flugzeugtyp etwa einen relativen Anteil von 6% bis 10% der Leermasse ein und hat während des Reisefluges keine Funktion. Es wird am Boden für Start, Landung und Rollen verwendet. Weiterhin ist das Fahrwerksystem sowohl in der Herstellung als auch im Betrieb sehr kostenintensiv. Ein Weglassen des Fahrwerksystems hätte eine Reduktion der Leermasse zur Folge und für den Flugzeugbetreiber im regulären Flugbetrieb ökonomische, ökologische und operationelle Vorteile.

Um diese Vorzüge nutzbar zu machen, muss an Flughäfen eine bodenbasierte Vorrichtung installiert werden, die den Start-, Lande- und Rollvorgang fahrwerkloser Flugzeuge ermöglicht.

In der Luftfahrtgeschichte gab es eine Vielzahl von Flugzeugtypen, die ohne Radfahrwerk ausgestattet waren. Im Folgenden werden bereits eingesetzte Technologien und bisher nicht realisierte Druckschriften im Zusammenhang mit fahrwerklosen Flugzeugen aufgezeigt. Grundsätzlich können die gefundenen Lösungen in zwei Gruppen unterteilt werden: den flugzeugseitig installierten und den bodenseitig installierten Lösungen.

Erste flugzeugseitige Lösungen wurden im zweiten Weltkrieg realisiert. Die ab 1941 gebaute Messerschmitt

Me 163 "Komet" war ein Abfangjäger mit einem Raketenantrieb und startete wahlweise auf einem abwerfbaren, zweirädrigen Fahrwerk oder einer Rampe. Die Landung wurde auf einer flugzeugseitig installierten Kufe durchgeführt. Von etwa 370 gebauten Flugzeugen stürzten 80% durch Landefehler ab.

Ab dem Jahr 1943 wurde die Arado Ar 234 "Blitz" hergestellt. Die erste Version wurde ohne Fahrwerk gebaut. Der "Blitz" der Version A-0 war mit einer fest installierten Landekufe und einem ausklinkbaren, dreirädrigen Startwagen ausgestattet. Der Start- und Landevorgang war allerdings so unpraktikabel, dass nachfolgende Versionen mit einem flugzeugseitig installierten Fahrwerk ausgestattet wurden.

Die Bodenoperationen, um diese Flugzeuge nach der Landung von der Landebahn zu transportieren, erneut auf den Startwagen zu befördern und den Startwagen nach jedem Start wieder einzuholen, waren sehr aufwändig. Allein diese Tatsache würde die gängigen Betriebsabläufe moderner Flugzeuge am Boden stark verkomplizieren. Zudem gab es bei der Landung mit einer Kufe nur eine eingeschränkte Spurstabilität und keine Möglichkeit die Bremskraft zu dosieren. Die Verzögerung richtete sich nach der Reibkraft zwischen dem Material der Kufe und dem des Landeplatzes.

Bahnseitig installierte Lösungen zur Landung fahrwerkloser Flugzeuge wurden von 1947 bis 1955 von der Royal Navy untersucht. Drei Prototypen der De Havilland F21 "Sea Vampire" wurden modifiziert, um Landungen mit eingefahrenem Fahrwerk auf einem flexiblen Gummideck durchzuführen. Dabei federte die Landebahn den Landestoß ab und die Bremskraft entstand durch die Reibung zwischen Flugzeugunterseite und Landebahnbelag. Im Anschluss an die Landung musste die "Sea Vampire" von der Bahn befördert und zum Start auf eine Rampe aufgesetzt werden. Nach zahlreichen Testläufen an Land wurde die flexible Landebahn auf dem Flugzeugträger "HIVIS Warrior" installiert. Die Verzögerung erfolgte hier kontrolliert über das bei Flugzeugträgern allgemein gebräuchliche Fanghaken-Seil System. Der Einsatz dieses Systems bei heutigen Flugzeugen, insbesondere bei Verkehrsflugzeugen eignet sich aufgrund der aufwändigen bodenseitigen Abläufe, der mangelnden Spurstabilität und der umfangreichen Modifizierung der gesamten Landebahn nicht.

Neben den bereits realisierten Systemen gibt es unterschiedliche Druckschriften, die sich mit Lösungsansätzen für den Landevorgang von fahrwerklos gestalteten Flugzeugen aus Gründen der Massenreduktion befassen.

In einer Druckschrift von 1968 beschreibt der Erfinder Jose Dominguez Rego ein so genanntes "Aircraft Landing System" (US 3380690), bei dem das fahrwerklose Flugzeug auf einer mit Rollen ausgestatteten Landebahn landet und am Ende der Bahn auf einen schienengeführten Schlitten überführt wird. Die Rotationsachse der Rollen ist quer zur Bahn angeordnet. Um eine Landung von Flugzeugen auf dem Unterboden des Rumpfes zu ermöglichen, müsste dieser deutlich verstärkt werden, welches zu einer erheblichen Massenzunahme führen würde. Diese relativiert die Massenreduktion durch das Weglassen des Fahrwerksystems. Weiterhin müsste die gesamte Landebahn mit Rollen ausgestattet sein, die jeweils einzeln gedämpft und bremsbar gestaltet sein müssten und somit eine hohe Systemkomplexität hätten.

Einen weiteren Lösungsvorschlag bieten H.-J. Müller und G. Plankermann 2002 in der Druckschrift "Vorrichtung in Form einer bodengebundenen Fahrwerksanordnung zum Starten und Landen von Flugzeugen" (DE 4102271) an. Dabei wird gänzlich auf die Verwendung einer herkömmlichen Landebahn verzichtet und stattdessen ein Wagen auf einer Magnetbahn eingesetzt. Dies setzt jedoch ein exakt platziertes Landemanöver voraus. Es fehlt gänzlich ein translatorischer Freiheitsgrad quer zur Landerichtung, um einen seitlichen Versatz des Flugzeuges kurz vor dem Aufsetzen zu berücksichtigen. Der seitliche Versatz kann durch Störungen entstehen, wie zum Beispiel Windböen, und auch durch den Einsatz von automatischen Landesystemen nicht ausgeschlossen werden. Des Weiteren ist die duale Benutzung der Vorrichtung auch durch konventionelle Flugzeuge mit Fahrwerk nicht möglich und von der höher gelegenen Trasse der Magnetbahn geht ein hohes Gefahrenpotential aus. Für die Notlandung von Flugzeugen mit defektem Fahrwerk, aber auch für reguläre Landungen fahrwerkloser Flugzeuge wurde 2003 von M. Günther eine "Anordnung mit einer Einrichtung zur Landung von Flugzeugen" (DE 19950674) konzipiert, bei der eine Landeplattform entlang der Landebahn bis zu einer Synchronisation des sich im Anflug befindlichen Flugzeuges beschleunigt. Die Einrichtung ist seitlich schienengeführt und mit einem Auffangnetz sowie unter der Landeplattform befestigten Rädern ausgestattet. Die Masse dieses Systems wird aufgrund seiner großen Dimensionierung voraussichtlich hoch sein und das Flugzeug muss nach der Landung angehoben und von der Landplattform transportiert werden. Weiterhin müsste auch hier der Flugzeugunterboden für eine schadenfreie Landung verstärkt werden. Ob ein wirtschaftlicher Betrieb unter diesen Rahmenbedingungen für den Einsatz von Flugzeugen, insbesondere im zivilen Verkehrsflugzeugsektor, ermöglicht werden kann ist fraglich.

Allgemein lässt sich sagen, dass die vorgestellten Lösungen und ähnliche in anderen Druckschriften beschriebene Lösungen (zum Beispiel US 3567 159, US 3128 066, US 2246 716, US 6394 391 B1, DE 3034014) sich für den regulären Flugbetrieb einschließlich des Landevorgangs von Flugzeugen, insbesondere von Verkehrsflugzeugen, meist aufgrund operationeller Gründe nicht, insbesondere durch zum Teil deutlich verkomplizierte bodenseitige Betriebsabläufe, oder aufgrund der nötigen umfangreichen Modifikationen am Flugzeug, zum Beispiel an der Rumpfunterseite und der damit einhergehenden höheren Strukturmasse, nicht eignen.

Es liegt der vorliegenden Erfindung die Aufgabe zugrunde, eine bodengebundene Vorrichtung zu schaffen, die sich auch für den regulären Flugbetrieb einschließlich des Start-, Lande- und Rollvorgangs eines Flugzeugs, insbesondere eines Verkehrsflugzeugs ohne Fahrwerksystem oder mit eingezogenem Fahrwerk eignet und möglichst ein Beibehalten der bestehenden Betriebsabläufe, der Piloten- und Flugverkehrskontrollprozeduren erlaubt.

Diese Aufgabe wird durch die in Anspruch 1 formulierten Merkmale gelöst.

Die Vorrichtung wird auf einer konventionellen Landebahn betrieben und hat zwei translatorische (entlang der Bahn und quer zur Bahn) sowie einen rotatorischen Freiheitsgrad um die Hochachse. Der Einsatz auf einem Flugzeugträger ist ebenfalls denkbar.

Die Nutzung der hier beschriebenen bodengebundenen Vorrichtung setzt eine geringfügige Modifikation an konventionellen Flugzeugen voraus. Es müssen flugzeugseitig Schnittstellen installiert werden, in die die bodengebundene Vorrichtung eingekoppelt werden kann. Diese Schnittstellen können zusätzlich zu den herkömmlichen Fahrwerken installiert werden. Angestrebt ist jedoch ein Austausch des bestehenden Fahrwerksystems durch die Schnittstellen. Dabei werden die Schnittstellen an den Stellen am Flugzeug integriert, an denen bei herkömmlichen Fahrwerksystemen die Lasteinleitung des Landestoßes erfolgt. An diesen Stellen ist die Struktur auf die Einleitung der entstehenden Kräfte ausgelegt. Eine Alternative bei Neuentwicklungen von Flugzeugen ist die Positionierung der Schnittstellen an unkonventionellen Stellen, wie zum Beispiel in größerer Entfernung als bisher üblich hinter und in kleinerer Entfernung vor dem Schwerpunkt. In Kombination mit der in Anspruch 13 beschriebenen Anpassung des Nickwinkels kann auf diese Weise die Landelast auf mindestens zwei Stützstellen jeweils vor und hinter dem Schwerpunkt gleichzeitig verteilt werden und somit die auftretenden Rumpf-Biegemomente beim Aufsetzen reduzieren. Durch das Weglassen des konventionellen Fahrwerksystems entstehen so genannte Schneeballeffekte (kleineres beziehungsweise reduziertes Hydrauliksystem, geringere strukturelle Verstärkungen durch den Entfall der Bremsbiegemomente des konventionellen Fahrwerkes, kleinerer Keelbeam oder Entfall dessen, durchgehend rundes Rumpfsegment im Bereich des ursprünglichen Hauptfahrwerk-schachtes, Verzicht auf den Kink im Flügelwurzelbereich, kleinere oder keine so genannten Belly Fairings und weitere), die zu einer deutlichen Reduktion der Leermasse zusätzlich zur eingesparten Fahrwerksystemmasse führen.

Neben der Massenreduktion haben diese Effekt einen zum Teil erheblichen (positiven) Einfluss auf die Herstellungs- und Betriebskosten der Flugzeuge. Weiterhin werden der pro Nutzlast spezifische Treibstoffverbrauch und der CO₂-Ausstoß deutlich gesenkt sowie die Lärmemission im Landeanflug aufgrund der fehlenden oder kleineren Fahrwerkklappen und des nicht mehr herausragenden Fahrwerkes reduziert.

An der Prozedur für eine normale Landung ändert sich für den Piloten kaum etwas. Die Prozedur einer Seitenwindlandung wird nach Anspruch 2 durch den rotatorischen Freiheitsgrad der Vorrichtung vereinfacht, da dieser dem Piloten ein Aufsetzen mit einem Windvorhaltewinkel ohne die bei einem konventionellen Fahrwerk in diesem Fall üblichen Komfort- und Sicherheitseinbußen für die Passagiere ermöglicht.

Auf die Funktion des Umkehrschubes kann nach Anspruch 4 verzichtet werden, da das Flugzeug über die Vorrichtung abgebremst wird, wodurch die Triebwerke geschont und somit die Wartungs- und Anschaffungskosten reduziert sowie die Lärm- und Schadstoffemission am Flughafen verringert werden.

Von der Installation von Notsystemen (zum Beispiel Bremsfallschirme) wird flugzeugseitig aus Gewichtsgründen bisher meist verzichtet. Solche Systeme können nach Anspruch 15 in Verbindung mit der bodengebundenen Vorrichtung zum Einsatz kommen und zur Erhöhung der aktiven Sicherheit im Bodenbetrieb von Flugzeugen beitragen. Im Falle der Bremsenergienutzung nach Anspruch 7 spielt die Masse bei der bodengebundenen Vorrichtung im Vergleich zu der Masse von Flugzeugen eine untergeordnete Rolle.

Die zur Führung und Energieübertragung für die Vorrichtung notwendigen Systeme sind neben der Landebahn installiert, so dass sich an der bestehenden Bahnbeschaffenheit und Flughafenstruktur nichts Wesentliches ändert. Dadurch wird die duale Benutzbarkeit von konventionellen und fahrwerklosen Flugzeugen gewährleistet. Weiterhin können Installations- und Umrüstarbeiten in Betriebsruhen getätigt werden. Die Bahn muss dazu nicht über einen längeren Zeitraum gesperrt werden.

Ausführungsbeispiele der Erfindung sind im Folgenden näher beschrieben und teils durch Abbildungen illustriert.

Es zeigen:
- Fig. 1: Eine schematische Darstellung der Landung mit einer bodengebundenen Vorrichtung für den regulären Flugbetrieb von Flugzeugen ohne Fahrwerksystem oder mit eingezogenem Fahrwerk.
- Fig. 2: Die Hauptkomponente Schlitten.
- Fig.: 3 Die Hauptkomponente Wagen.
- Fig. 4: Die Hauptkomponente Bodenfahrwerk.

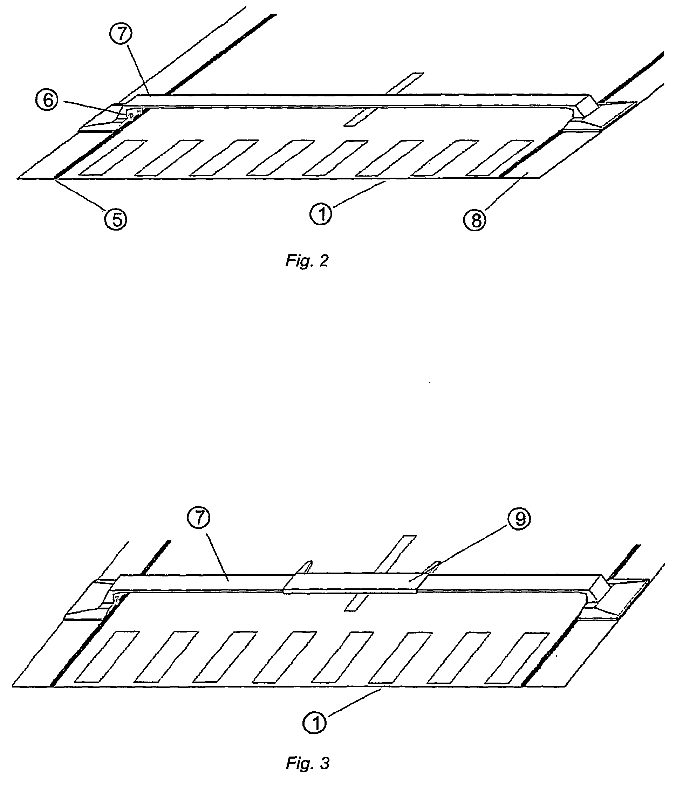

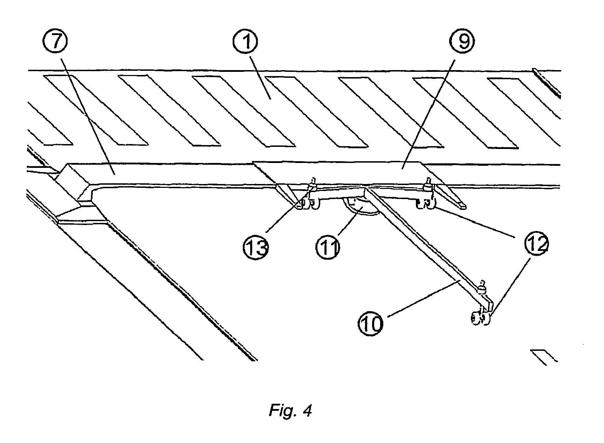

Das in Anspruch 1 als Vorrichtung bezeichnete System besteht aus drei Hauptkomponenten: Dem Schlitten 7 für den translatorischen Freiheitsgrad entlang der Bahn, dem Wagen 9 für den translatorischen Freiheitsgrad quer zur Bahn und dem für die Bodenoperationen auskoppelbaren und am Flughafen mehrfach vorhandenen Bodenfahrwerk 10 für den rotatorischen Freiheitsgrad um die Hochachse. Der Schlitten 7 aus Fig. 2 wird entlang der Landebahn 1 auf einer Schienen/Räder-Kombination 5, 6 geführt und nach Anspruch 9 von einem Langstator-Linearmotor 8 angetrieben. Der Wagen 9 aus Fig. 3 wird entlang des Schlittens 7 (das heißt quer zur Landebahn) geführt und entweder von einem Linearmotor oder aktiv lenkbar gestalteten Rädern 12 angetrieben. Die Kombination aus Schlitten 7 und Wagen 9 wird im Folgenden als Schlittensystem bezeichnet. Der rotatorische Freiheitsgrad des Bodenfahrwerks 10 aus Fig. 4 wird über den so genannten Rotator 11 umgesetzt, der über zwei zwischen dem Rotator 11 und Wagen 9 montierte Linearzylinder angetrieben wird.

Die Vorrichtung 3 ist nach den Ansprüchen 10 und 12 mit einem auf unterschiedliche Massen adaptierbaren Stoßdämpfersystem ausgestattet, welches nach Anspruch 11 auch flugzeugseitig installiert werden kann. Durch die Verlängerung des maximalen Federweges im Vergleich zu herkömmlichen Fahrwerksystemen kann das Landelastvielfache reduziert werden. Es ist auf diese Weise im Notfall möglich ein Flugzeug eventuell ohne Notwendigkeit flugzeugseitiger Modifikationen mit maximaler Abflugmasse anstatt mit der zumeist deutlich geringeren maximalen Landemasse zu landen, da die in das Flugzeug eingeleiteten Kräfte des Landestoßes durch die Federwegsverlängerung reduziert werden. Ein Ablassen des Treibstoffes mit seinen ökologischen und ökonomischen Auswirkungen wäre dann nicht mehr erforderlich.

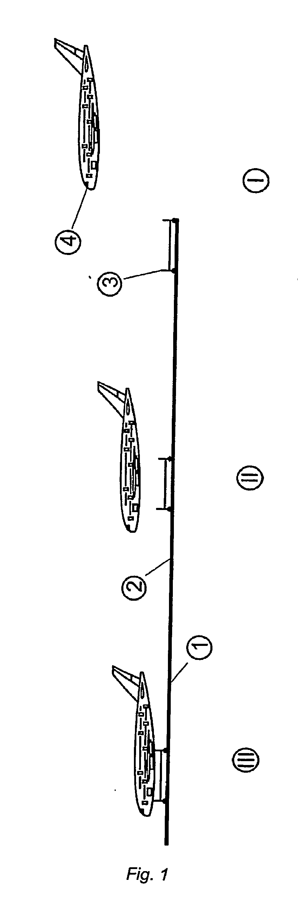

Befindet sich ein mit den entsprechenden Schnittstellen ausgerüstetes Flugzeug 4 im Landeanflug, wird der Antrieb des Schlittensystems auf Basis einer redundanten Kopplung von bodenseitiger Sensorik (zum Beispiel Radar- oder Lasersensorik) und flugzeugseitiger Datenkommunikation von Fluglage- und Positionsinformationen in Verbindung mit einer Regelung aktiviert und passt sich der Position und Lage des ankommenden Flugzeugs 4 an. Die Vorrichtung 3 befindet sich zu Anfang in Flugrichtung vor der Bahnschwelle 2 (Position I in Fig. 1). Nähert sich das im Anflug befindliche Flugzeug 4, wird die Vorrichtung 3 in einer Weise beschleunigt, dass die Differenzgeschwindigkeit zwischen Vorrichtung 3 und Flugzeug 4 spätestens an der Bahnschwelle 2 gleich Null ist und sich die Vorrichtung 3 in Richtung des Erdbeschleunigungskraftvektors unter dem Flugzeug 4 befindet (Position II in Fig. 1). Die beiden translatorischen Freiheitsgrade und der rotatorische Freiheitsgrad um die Hochachse der Vorrichtung 3 sorgen in Verbindung mit dem jeweiligen Antrieb dafür, dass sich die Dockingvorrichtungen 13 des Bodenfahrwerkes 10 zwischen Bahnschwelle 2 und Aufsetzposition stets unter den flugzeugseitig installierten Schnittstellen befinden. Der Pilot oder der Autopilot kann auf diese Weise wie gewohnt landen. Sind beide nach Anspruch 16 trichterförmigen flugzeugseitigen Schnittstellen im Hauptfahrwerkbereich auf den zapfenartigen Dockingvorrichtungen 13 des Bodenfahrwerks 10 angedockt, können Verriegelungen eingesetzt werden, um ein erneutes Abheben ohne den Einsatz von Spoilern zu vermeiden.

Nach dem Aufsetzen und Andocken des Flugzeuges 4 an die Vorrichtung 3 wird diese nach Anspruch 5 so abgebremst, dass das Flugzeug 4 kurz vor Erreichen einer abgehenden Rollbahn zum Stehen kommt (oder auf eine den Rollwegen angepasste Geschwindigkeit reduziert wird), um die Landebahn 1 schnellstmöglich verlassen zu können (Position III in Fig. 1).

Die bei dem Bremsvorgang frei werdende Bewegungsenergie kann, wenn die Anlage nach Anspruch 7 beschrieben ausgestattet ist, in einer Art Gyroskop gespeichert oder durch Wirbelstrom in Verbindung mit Wärmetauschern in nutzbare Wärme umgewandelt werden. Es ist auch denkbar den Linearantrieb, der in Anspruch 9 beschrieben ist, so einzusetzen, dass die Bewegungsenergie in elektrische Energie umgewandelt wird, die beispielsweise gespeichert oder in das örtliche Stromnetz eingespeist werden kann.

Um die Landebahn 1 nach dem Abbremsen zu verlassen, wird das Bodenfahrwerk 10 (siehe Fig. 4) von dem Wagen 9 (siehe Fig. 3) entkoppelt und verbleibt unter dem Flugzeug 4. Das Flugzeug 4 kann wie gewohnt rollen. Das Bodenfahrwerk 10 ist am jeweiligen Flughafen mehrfach vorhanden, um eine gleichzeitige Abfertigung mehrerer fahrwerkloser Flugzeuge 4 zu ermöglichen.

In der in Anspruch 6 beschriebenen Bauform ist das Bodenfahrwerk 10 mit einem eigenen Antrieb ausgestattet, welches ein Abschalten der Haupttriebwerke kurz nach der Landung bis kurz vor dem Start ermöglicht. Dies reduziert die Lärm- und Schadstoffemission insbesondere im terminalnahen Bereich und ersetzt zusätzlich die Verwendung eines push-back-Fahrzeugs für ein Zurücksetzen des Flugzeugs aus der Parkposition.

Die Vorrichtung 3 kann, wie in Anspruch 8 beschrieben, die Beschleunigung beim Start von Flugzeugen durch das Antriebssystem 8 aktiv unterstützen. Dazu kann beispielsweise die bei dem Abbremsvorgang gespeicherte Energie eingesetzt werden. Dadurch kann ein Start mit reduzierter Triebwerkleistung erfolgen, welcher die Triebwerke schont und somit die Wartungsintervalle verlängert (folglich entstehen geringere Wartungskosten). Weiterhin werden Lärm- und Schadstoffemissionen am Flughafen reduziert.

Beim Start werden bei Erreichen der erforderlichen Geschwindigkeit die Dockingvorrichtungen 13 von den flugzeugseitigen Schnittstellen entkoppelt und das Flugzeug kann abheben. In der Bauform, die in Anspruch 13 beschrieben ist, kann der Nickwinkel durch die Vorrichtung verändert werden und somit ein Abheben des Flugzeuges unterstützen. So kann die Größe von Steuerflächen, für die dieses Manöver dimensionierend ist, reduziert werden.

Aus operativen Gründen kann es in einigen Fällen sinnvoll sein, das Schlittensystem nach Anspruch 14 nicht über die Landebahn zurückzuführen, sondern seitlich daneben oder seitlich in einem Tunnel unter den eventuell kreuzenden Rollbahnen.

Ergänzend sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können.

### Bezugszeichen:

- 1: Landebahn
- 2: Bahnschwelle
- 3: bodenbasierte Fahrwerksvorrichtung
- 4: fahrwerkloses Flugzeug mit Schnittstellen
- 5: Schiene
- 6: Räder
- 7: Schlitten
- 8: Schlittenantrieb
- 9: Wagen
- 10: Bodenfahrwerk
- 11: Rotator
- 12: Räder
- 13: Dockingvorrichtung

## Patentansprüche

1. Vorrichtung für den Start-, Lande und Rollvorgang eines Flugzeugs (4) ohne Fahrwerksystem oder mit eingezogenem Fahrwerk, die ein Bodenfahrwerk aufweist, dessen Geschwindigkeit beim Landen an die Geschwindigkeit des Flugzeugs angepasst werden kann, wobei das Bodenfahrwerk (10) mindestens zwei Einkoppelmittel (13) aufweist, die ein Einkoppeln von Schnittstellen des Flugzeugs (4) auf dem Bodenfahrwerk (10) erlauben,
**dadurch gekennzeichnet, dass**
- das Bodenfahrwerk (10) lösbar mit einem Schlittensystem (7, 8, 9) verbunden ist, das in eine Bewegungsrichtung antreibbar ist,
- das Bodenfahrwerk (10) entlang dem Schlittensystem (7, 8, 9) quer zu der Bewegungsrichtung des Schlittensystems (7, 8, 9) verfahrbar ist, um das Bodenfahrwerk (10) an die Position des Flugzeugs (4) anzupassen.

2. Vorrichtung nach Anspruch 1, **dadurch gekennzeichnet, dass** das Bodenfahrwerk (10) um die Hochachse in einem Winkel relativ zu der Bewegungsrichtung des Schlittensystems verstellbar ist, um das Bodenfahrwerk (10) an einen Gierwinkel des Flugzeugs (4) relativ zur Bewegungsrichtung des Schlittensystems (7, 8, 9) anzupassen.

3. Vorrichtung nach Anspruch 1 oder 2, **dadurch gekennzeichnet, dass** das Schlittensystem (7, 8, 9) einen angetriebenen Schlitten (7, 8) und einen mit dem Bodenfahrwerk (10) lösbar verbundenen Wagen (9) aufweist, der auf dem Schlitten (7) verfahrbar ist.

4. Vorrichtung nach Anspruch 1, **dadurch gekennzeichnet, dass** das Schlittensystem (7, 8, 9) und oder das Bodenfahrwerk (10) über ein Bremssystem verfügt.

5. Vorrichtung nach Anspruch 1 und 4, **dadurch gekennzeichnet, dass** das Schlittensystem (7, 8, 9) und oder das Bodenfahrwerk (10) über ein Bremssystem verfügt, das eine Regelung der Bremskraft so ermöglichen, dass das mit dem Bodenfahrwerk (10) verbundene Flugzeug (4) unmittelbar an einem von der Landebahn (1) abgehenden Rollweg zum Stehen kommt.

6. Vorrichtung nach Anspruch 1, **dadurch gekennzeichnet, dass** das Bodenfahrwerk (10) zusätzlich über einen eigenen Antrieb und Systeme verfügt, die für ein Rollen ohne die Verwendung der Haupttriebwerke des Flugzeugs (4) notwendig sind und / oder ein pushback-Fahrzeug ersetzen.

7. Vorrichtung nach Anspruch 1 und 4, **dadurch gekennzeichnet, dass** die Bewegungsenergie beim Bremsen gespeichert und oder in nutzbare Wärme und oder elektrische Energie transformiert wird.

8. Vorrichtung nach Anspruch 1, **dadurch gekennzeichnet, dass** die Beschleunigung beim Start von Flugzeugen (4) durch den Antrieb des Schlittensystems (7, 8, 9) unterstützt wird.

9. Vorrichtung nach Anspruch 1, **dadurch gekennzeichnet, dass** das Schlittensystem (7, 8, 9) von einem elektromagnetischen Linearantrieb angetrieben wird.

10. Vorrichtung nach Anspruch 1 oder 3, **dadurch gekennzeichnet, dass** ein oder mehrere Dämpferelemente in das Schlittensystem (7, 8, 9) integriert und / oder in das Bodenfahrwerk (10) integriert und / oder in das Flugzeug integrierbar sind.

11. Vorrichtung nach Anspruch 10, **dadurch gekennzeichnet, dass** die Dämpferelemente auf verschiedene Flugzeugmassen adaptierbar sind.

12. Vorrichtung nach Anspruch 1, **dadurch gekennzeichnet, dass** der Nickwinkel des Flugzeugs (4), insbesondere beim Starten und Landen, geändert werden kann.

13. Vorrichtung nach Anspruch 1, **dadurch gekennzeichnet, dass** der oder die Schlitten (7) nicht über die Landebahn (1) auf die Lande- und oder Start-Bereitschaftsposition zurückgeführt werden.

14. Vorrichtung nach Anspruch 1, **dadurch gekennzeichnet, dass** das Schlittensystemund oder Bodenfahrwerk (10) zusätzlich über Notsysteme verfügt, mit denen die Bremskraft verstärkt werden kann.

15. Vorrichtung nach Anspruch 1, **dadurch gekennzeichnet, dass** die Einkoppelmittel (13) des Bodenfahrwerks (10) aus, hervorstehenden zapfenartigen Dockingvorrichtungen bestehen und die flugzeugseitigen, nicht herausragenden Schnittstellen trichterförmig gestaltet sind.

## Claims

1. An apparatus for the take-off, landing and taxiing of an aircraft (4) without undercarriage system or with retracted undercarriage, which comprises a ground-based undercarriage, the speed of which can be matched with the speed of the aircraft (4) when landing, wherein the ground-based undercarriage (10) has at least two coupling means (13), which enable interfaces of the aircraft (4) to be coupled onto the ground-based undercarriage,
**characterized in that**
- the ground-based undercarriage (10) is detachably connected to a sliding system (7, 8, 9), which can be driven in a direction of movement,
- the ground-based undercarriage (10) can be moved along the sliding system (7, 8, 9) transverse to the direction of movement of the sliding system to match the ground-based undercarriage (10) with the position of the aircraft (4).

2. The apparatus as claimed in claim 1, **characterized in that** the ground-based undercarriage (10) can be adjusted about the vertical axis at an angle relative to the direction of movement of the sliding system (7, 8, 9) to match the ground-based undercarriage (10) with an yaw angle of the aircraft (4) relative to the direction of movement of the sliding system (7, 8, 9).

3. The apparatus as claimed in claim 1 or 2, **characterized in that** the sliding system (7, 8, 9) comprises a driven slide (7, 8) and a to a ground-based undercarriage (10) detachably connected trolley (9), which can be moved along the slide (7).

4. The apparatus as claimed in claim 1, **characterized in that** the sliding system (7, 8, 9) and/or the ground-based undercarriage (10) has a braking system.

5. The apparatus as claimed in claim 1 and 4, **characterized in that** the sliding system (7, 8, 9) and/or the ground-based undercarriage (10) has a braking system that enables the braking force to be controlled so that the aircraft (4) which is connected to the ground-based undercarriage (10) comes to a standstill immediately by an outgoing taxiway from the runway (1).

6. The apparatus as claimed in claim 1, **characterized in that** the ground-based undercarriage (10) additionally has its own drive and systems which are necessary for taxiing without the use of the main engines of the aircraft (4) and/or replace a push-back vehicle.

7. The apparatus as claimed in claim 1 and 4, **characterized in that** the kinetic energy on braking is stored and/or transformed into usable heat and/or electrical energy.

8. The apparatus as claimed in claim 1, **characterized in that** the acceleration when aircraft (4) take off is supported by the drive (8) of the sliding system (7, 8,9).

9. The apparatus as claimed in claim 1, **characterized in that** the sliding system (7, 8, 9) is driven by an electromagnetic linear drive.

10. The apparatus as claimed in claim 1 or 3, **characterized in that** one or more damper elements are integrated into the sliding system (7, 8, 9) and/or are integrated into the ground-based undercarriage (10) and/or are integrable into the aircraft.

11. The apparatus as claimed in claim 10, **characterized in that** the damper elements can be adapted to different aircraft masses.

12. The apparatus as claimed in claim 1, **characterized in that** the pitch angle of the aircraft (4) can be changed, particularly on take-off and landing.

13. The apparatus as claimed in claim 1, **characterized in that** the slide or slides (7) are not taken back to the ready-to-land and/or ready-to-take-off position via the runway (1).

14. The apparatus as claimed in claim 1, **characterized in that** the sliding system (7, 8, 9) and/or the ground-based undercarriage (10) additionally has emergency systems with which the braking force can be amplified.

15. The apparatus as claimed in claim 1, **characterized in that** the coupling means (13) of the ground-based undercarriage (10) consist of protruding pin-like docking devices and the non-protruding interfaces on the aircraft are designed funnel-shaped.

## Revendications

1. Dispositif pour opérations de décollage, d'atterrissage et de roulage d'avion (4) sans système de train d'atterrissage ou avec train d'atterrissage rentré, le dispositif présente un train d'atterrissage au sol, dont la vitesse à l'atterrissage peut être adaptée à celle de l'avion, sachant que le train d'atterrissage au sol (10) présente un minimum de deux moyens de liaison (13) permettant de relier les interfaces de l'avion (4) au train d'atterrissage au sol (10), **caractérisé par le fait que**
- le train d'atterrissage (10) est relié de façon amovible à un système de coulisseau (7, 8, 9) qui peut être entraîné dans une direction du déplacement,
- le train d'atterrissage (10) le long du système de coulisseau (7, 8, 9) peut se déplacer en travers à la direction de déplacement du système de coulisseau (7, 8, 9) pour adapter le train d'atterrissage (10) à la position de l'avion (4).

2. Le dispositif selon la revendication 1 est **caractérisé par le fait que** le train d'atterrissage (10) autour de l'axe vertical est réglable sur un angle relative à la direction de déplacement du système de coulisseau afin d'adapter le train d'atterrissage (10) à un angle d'embardée de l'avion (4), relative à la direction de déplacement du système de coulisseau (7, 8, 9).

3. Le dispositif selon la revendication 1 ou 2 est **caractérisé par le fait que** le système de coulisseau (7, 8, 9) présente un coulisseau entraîné (7, 8) et un chariot (9) relié de façon amovible au train d'atterrissage au sol (10) qui peut se déplacer sur le coulisseau (7).

4. Le dispositif selon la revendication 1 est **caractérisé par le fait que** le système de coulisseau (7, 8, 9) et / ou le train d'atterrissage au sol (10) est équipé (sont équipés) d'un système de freinage.

5. Le dispositif selon les revendications 1 et 4 est **caractérisé par le fait que** le système de coulisseau (7, 8, 9) et / ou le train d'atterrissage au sol (10) est équipé (sont équipés) d'un système de freinage permettant de régler la force de freinage de sorte que l'avion (4) relié au train d'atterrissage au sol (10) s'arrête directement sur un chemin de roulement au départ de la piste d'atterrissage (1).

6. Le dispositif selon la revendication 1 est **caractérisé par le fait que** le train d'atterrissage au sol (10) dispose en outre, de son propre entraînement et des systèmes nécessaires au roulage sans avoir à utiliser le mécanisme principal autopropulseur de l'avion (4) et /ou qui remplacent un véhicule de traction.

7. Le dispositif selon les revendications 1 et 4 est **caractérisé par le fait que** l'énergie cinétique au freinage est stockée et/ou transformée en chaleur exploitable et / ou en énergie électrique.

8. Le dispositif selon la revendication 1 est **caractérisé par le fait que** l'accélération au décollage des avions (4) est favorisée par l'entraînement du système de coulisseau (7, 8, 9).

9. Le dispositif selon la revendication 1 est **caractérisé par le fait que** le système de coulisseau (7, 8, 9) est actionné par un entraînement linéaire électromagnétique.

10. Le dispositif selon la revendication 1 ou 3 est **caractérisé par le fait que** le système de coulisseau (7, 8, 9) et / ou le train d'atterrissage au sol (10) intègre (nt) un ou plusieurs éléments amortisseurs et / ou que ceux-ci peuvent être incorporé à l'avion.

11. Le dispositif selon la revendication 10 est **caractérisé par le fait que** les éléments amortisseurs sont adaptables aux masses différentes des avions.

12. Le dispositif selon la revendication 1 est **caractérisé par le fait que** l'angle d'incidence de l'avion (4) peut être modifié, en particulier au décollage et à l'atterrissage.

13. Le dispositif selon la revendication 1 est **caractérisé par le fait que** le ou les coulisseau (x) (7) n'est (ne sont) pas ramené (s) au-dessus la piste d'atterrissage (1) en position d'attente d'atterrissage et /ou de décollage.

14. Le dispositif selon la revendication 1 est **caractérisé par le fait que** le système de coulisseau et / ou de train d'atterrissage au sol (10), en outre, dispose de systèmes de secours supplémentaires permettant d'augmenter la force de freinage.

15. Le dispositif selon la revendication 1 est **caractérisé par le fait que** les moyens de liaison (13) du train d'atterrissage au sol (10) se composent de dispositifs d'amarrage de type à cône saillant et que les interfaces du côté de l'avion qui ne dépassent pas sont en forme d'entonnoir.
